# EUROPEAN PATENT APPLICATION

(11) **EP 1 398 757 A2**
(43) Date of publication of application: **17.03.2004**
(21) Application number: 03255710.0
(22) Date of filing: 12.09.2003
(51) Int. Cl.: G09G 5/00

(54) **Image brightness and colour temperature control**

(30) Priority: 13.09.2002 KR 2002055644
(71) Applicant: SAMSUNG ELECTRONICS CO., LTD., Suwon-City, Kyungki-do (KR)
(72) Inventor: Ko, Kyung pill, Suwon-si Gyeonggi-do (KR); Jang, Mi-sook, 107-1503 Woncheon Jugong Apt., Suwon-si Gyeonggi-do (KR)
(74) Representative: Geary, Stuart Lloyd

(57) **Abstract**

An apparatus and method automatically adjusting the brightness and the colour temperature of a screen to an optimum state according to input RGB signals. The apparatus includes an RGB colour signal generator and a system controller. The RGB colour signal generator determines a maximum value of each of the input RGB colour signals and a total maximum value, compares the total maximum value with a predetermined critical value, adjusts the brightness level of the input RGB colour signals based on the comparison result, compares the maximum values, and if one of the maximum values is higher than the others, generates RGB colour signals, one of which has a colour temperature varying according to a predetermined value. The system controller provides the RGB colour signal generator with data on the predetermined critical value and a reference value used for detecting the colour signal having the higher maximum value.

## Description

The present invention relates to an apparatus for adjusting an image signal to improve the appearance of the image represented thereby on a display, the method comprising receiving means for receiving a digital RGB signal, processing means and output means for outputting an adjusted digital RGB signal.

With a conventional image display apparatus, the brightness and the colour temperature of a screen is adjusted with values set by a user using an on-screen display (OSD) menu or using adjustment values set during manufacture of the image display apparatus.

In the above method, values necessary for adjusting the brightness and the colour temperature are set, in consideration of the brightness levels and the colour temperatures of the input RGB colour signals, when adjusting the brightness and the colour temperature of the screen. Thus, in the case where the brightness and the colour temperature of an input RGB colour signal vary, the user has to readjust the brightness and the colour temperature of the screen using the OSD menu.

An apparatus according to the present invention is characterised in that the processing means is configured for accumulating the pixel colour values of a received image signal from the receiving means to produce accumulated values and modify the pixel value of the received image signal in dependence on said accumulated values and a reference.

Preferably, the processing means is configured to calculate the sum of said accumulated values and perform said modification so as to adjust the brightness of the image. More preferably, the processing means is configured to determine a brightness adjustment control value in dependence on the brightness of a portion of the image represented by said image signal. Still more preferably, the processing means is configured to reduce the brightness of the image if said portion is substantially white and said sum is greater than a first threshold and/or to increase the brightness of the image if said portion is substantially black and said sum is less than a second threshold.

Preferably, the processing means is configured for comparing said accumulated values and varying said pixel colour values in dependence on the result of said comparison to adjust the colour temperature of the image represented by the image signal.

Preferably, an analogue-to-digital converter is arranged for digitising an input analogue RGB signal and providing the resultant digital RGB signal to the receiving means.

Preferably, the processing means is configured to process image signals representing frames of a video signal on a frame-by-frame basis and the receiving means is configured for receiving an RGB video signal.

Additional preferred and optional features are set forth in claims 9 to 43 appended hereto.

Embodiments of the present invention will now be described, by way of example, with reference to the accompanying drawings, in which:
Figure 1 is a block diagram of an apparatus for adjusting the brightness and the colour temperature of a screen according to the present invention;
Figure 2 is a flowchart illustrating a process of analysing input data in a method for adjusting the brightness and the colour temperature of a screen according to the present invention;
Figure 3 is a flowchart illustrating a process of adjusting the colour temperature in a method for adjusting the brightness and colour temperature of a screen according to the present invention; and
Figure 4 is a flowchart illustrating a process of adjusting the brightness in a method for adjusting the brightness and the colour temperature of a screen according to the present invention.

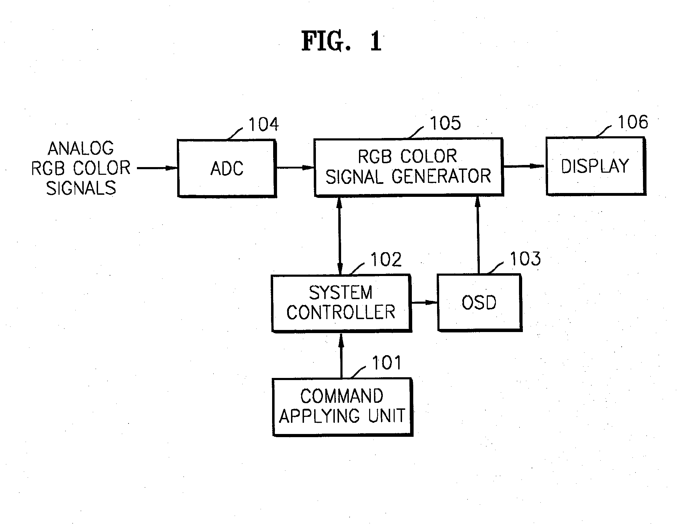

Referring to Figure 1, the apparatus includes a command applying unit 101, a system controller 102, an OSD unit 103, an analogue-to-digital converter (ADC) 104, an RGB colour signal generator 105 and a display 106.

The command applying unit 101 enables a user to input commands to the system controller 102. The user can input reference values necessary for automatically adjusting the brightness and the colour temperature of a screen via the command applying unit 101. The reference values are a brightness level and a colour temperature value that the user desires to obtain with respect to an image displayed on the display 106.

The reference values can be set via an OSD menu displayed on the display 106. In other words, if the output of a corresponding OSD menu is requested via the command applying unit 101, the system controller 102 controls the OSD unit 103 to cause it to output the corresponding OSD menu. Consequently, the OSD unit 103 transmits data defining the corresponding OSD menu to the RGB colour signal generator 105. The RGB colour signal generator 105 outputs corresponding RGB signals to the display 106, so that the corresponding OSD menu is displayed. The user sets the reference values of the brightness level and the colour temperature value by means of the OSD menu displayed on the display 106.

When the reference values are set, the system controller 102 sets a window for input RGB colour signals based on the highest resolution supported by the display 106. The window is used in adjusting the brightness level of the input RGB colour signals. A first predetermined critical value is set in the case where the brightness level of pixels in the window corresponds substantially to full white. A second predetermined critical value is set in the case where the brightness level of pixels in the window corresponds substantially to full black. The window may be the whole or a portion of an image.

The system controller 102 determines a value for increasing and/or decreasing the brightness level of the input RGB colour signals on the basis of the reference values input by the user. For example, if the system controller 102 determines that the brightness level of the input RGB colour signals is too high, the system controller 102 determines how much the brightness level should be reduced, based on the reference values, to make the display comfortable to view. In contrast, if the controller system 102 determines that the brightness level of the input RGB colour signals is too low, the system controller 102 determines how much the brightness level should be increased, based on the same reference values in order to make the display comfortably viewable.

A reference value and a predetermined value necessary for adjusting the colour temperature of a screen are set on the basis of the input reference values. The reference value is used when comparing maximum (sum) values of the input RGB colour signals and detecting a colour signal having a higher maximum value than the other colour signals of the input RGB colour signals. In other words, the colour temperature of a colour signal detected on the basis of the reference value is compensated for. The reference value is set based on a difference value, such that the user can perceive that the colour temperature of the colour signal displayed on the screen, having a higher maximum value than the colour temperatures of the other colour signals displayed on the screen.

The predetermined value is set to control the degree of compensation for colour temperature. In other words, if the colour temperature of an RGB colour signal is to be compensated for, the colour temperature of a newly generated RGB colour signal is increased to the predetermined value.

The system controller 102 provides first and second critical values, data on the increase and decrease ratios and data on the reference value and the predetermined value to the RGB colour signal generator 105.

The ADC 104 converts input analogue RGB colour signals into digital RGB colour signals. The digital RGB colour signals are transmitted to the RGB colour signal generator 105.

Based on the values provided from the system controller 102, the RGB colour signal generator 105 detects and stores the maximum value of each of the input RGB colour signals, detecting and storing the total maximum value of the input RGB colour signals. The total maximum value is the sum of the maximum values of the RGB colour signals. The maximum values are the maximum values of each of the RGB colour signals. In other words, the maximum value of the R colour signal, the maximum value of the G colour signal and the maximum value of the B colour signal are detected and stored. For example, the total maximum value of one frame is the sum of the colour values of the RGB colour signals of pixels in that one frame. Each of the maximum values is the sum of colour values of the R colour signal of pixels in that one frame, the sum of colour values of the G colour signal, and the sum of colour values of the B colour signal. The total maximum value is obtained from pixels in the window and the maximum values of the RGB colour signals are obtained from all pixels in a screen.

The first and second critical values provided by the system controller 102 are compared with the total maximum value. If the total maximum value is greater than the first critical value, the brightness level of the input RGB colour signals is reduced by a predetermined amount. If the total maximum value is less than the second predetermined critical value, the brightness level of the input RGB colour signals is increased by a predetermined amount.

A difference value is obtained by comparing the maximum values of the RGB colour signals. If the difference value is greater than the reference value from the system controller 102, the colour signal is identified by the RGB colour signal generator 105 as a colour signal requiring colour temperature compensation. In other words, the colour temperature of the detected colour signal is increased to the predetermined value provided from the system controller 102.

The RGB colour signals with the adjusted brightness levels and the adjusted colour temperatures are transmitted to the display 106. The adjustment of the brightness and the colour temperature of the input RGB colour signals can be performed on a frame-by-frame basis.

In the above-described embodiment, the brightness and colour temperature of a displayed image are adjusted on the basis of brightness and colour temperature reference values that a user inputs via the command applying unit 101. However, alternatively, the brightness and the colour temperatures of a screen of input RGB colour signals may be adjusted based on predetermined reference values without the user's ongoing participation.

The operation of the apparatus shown in Figure 1 will now be described in detail.

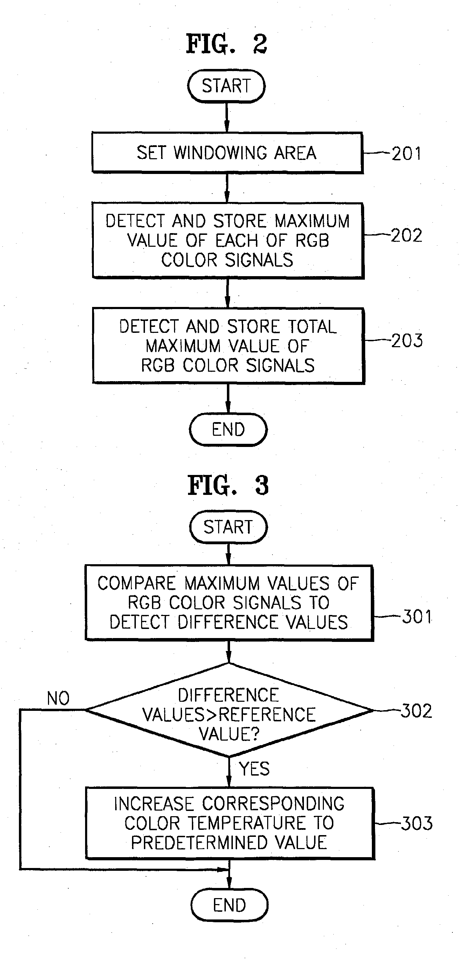

Referring to Figure 2, RGB colour signals are input, in operation 201, as described with reference to Figure 1, and a test window is set within the image based on the highest resolution supported by the display 106. The window is used in detecting the brightness levels of the input RGB colour signals for adjusting the brightness.

In operation 202, maximum values of the input RGB colour signals of an image are detected and stored. The maximum values of the input RGB colour signals are as described with reference to Figure 1.

In operation 203, the total maximum value of the RGB colour signals of pixels in the window is calculated and stored. The total maximum value is as described with reference to Figure 1.

Referring to Figure 3, in operation 301, the maximum values of the RGB colour signals, stored in operation 202, are compared to detect difference values.

In operation 302, it is checked whether the detected difference value is greater than a reference value. As described with reference to Figure 1, the reference value is used to detect colour signals requiring colour temperature compensation. If the difference value is greater than the reference value, in operation 303, the colour temperature of the colour signal is increased to a predetermined value and the process stops. Thus, RGB colour signals with adjusted colour temperatures are generated.

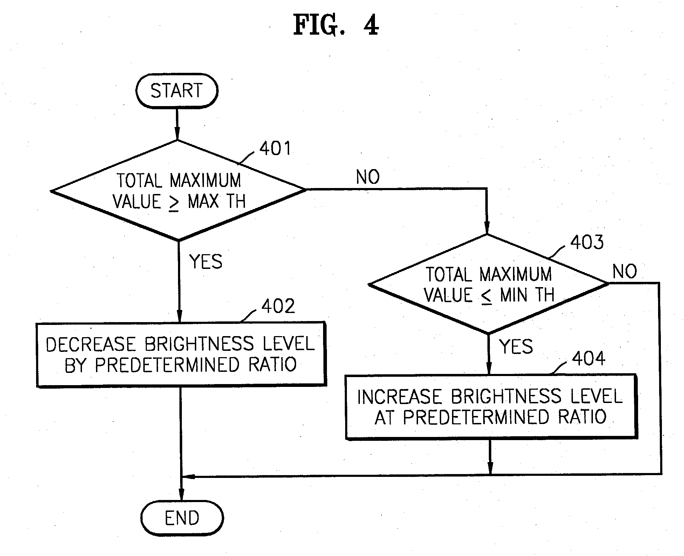

Referring to Figure 4, in operation 401, it is determined whether the total maximum value of the RGB colour signals in the window, stored in operation 203, is greater than or equal to a maximum critical value MAX TH. The maximum critical value MAX TH corresponds to the first predetermined critical value described with reference to Figure 1. In other words, the maximum critical value MAX TH is determined in consideration of the case where the brightness level of pixels in the window corresponds substantially to full white.

If, in operation 401, it is determined that the total maximum value is greater than the maximum critical value MAX TH, then in operation 402, the brightness level of the input RGB colour signals are reduced by a predetermined amount and the process stops.

If, in operation 401, however, it is determined that the total maximum value is less than the maximum critical value MAX TH, then, in operation 403, it is determined whether the total maximum value is less than or equal to a minimum critical value MIN TH. The minimum critical value MIN TH is the second predetermined critical value described with reference to Figure 1. In other words, the minimum critical value MIN TH is determined in consideration of the case where the brightness level of pixels in the window corresponds substantially to full black.

If, in operation 403, the total maximum value is less than or equal to the minimum critical value MIN TH, then, in operation 404, the brightness level of the input RGB colour signals is increased by a predetermined amount and the process stops.

As described with reference to Figure 1, the predetermined amounts in operations 402 and 404 are determined by a reference value and a predetermined value set by a user or during manufacture to adjust the brightness and the colour temperature.

As described above, by automatically adjusting the brightness and the colour temperature of an image according to the input RGB colour signals, the user does not need to manually adjust the display in response to changes in the input signal to maintain a comfortably viewable image.

For example, in the case where a document having a high contrast ratio is displayed on a screen, e.g. black letters on a white screen, the brightness level of the screen is automatically reduced by an amount based on a predetermined reference value. Alternatively, when games or moving pictures are displayed on the screen, the entire screen may appear darker. In this case, the brightness level of the screen may be automatically increased by an amount based on a predetermined reference value. As a result, screen images are comfortably viewable.

According to other aspects of the invention, the system controller 102 or other component is a computer implementing the method shown in FIGS. 2-4 using data encoded on a computer readable medium

Although a few embodiments of the present invention have been particularly shown and described, it would be appreciated by those skilled in the art that changes may be made therein in these embodiments.

## Claims

1. An apparatus for adjusting an image signal to improve the appearance of the image represented thereby on a display, the method comprising:
receiving means for receiving a digital RGB signal;
processing means; and
output means for outputting an adjusted digital RGB signal,
**characterised in that**
the processing means is configured for accumulating the pixel colour values of a received image signal from the receiving means to produce accumulated values and modify the pixel value of the received image signal in dependence on said accumulated values and a reference.

2. An apparatus according to claim 1, wherein the processing means is configured to calculate the sum of said accumulated values and perform said modification so as to adjust the brightness of the image.

3. An apparatus according to claim 2, wherein the processing means is configured to determine a brightness adjustment control value in dependence on the brightness of a portion of the image represented by said image signal.

4. An apparatus according to claim 3, wherein the processing means is configured to reduce the brightness of the image if said portion is substantially white and said sum is greater than a first threshold.

5. An apparatus according to claim 3 or 4, wherein the processing means is configured to increase the brightness of the image if said portion is substantially black and said sum is less than a second threshold.

6. An apparatus according to any preceding claim, wherein the processing means is configured for comparing said accumulated values and varying said pixel colour values in dependence on the result of said comparison to adjust the colour temperature of the image represented by the image signal.

7. An apparatus according to any preceding claim, including an analogue-to-digital converter arranged for digitising an input analogue RGB signal and providing the resultant digital RGB signal to the receiving means.

8. An apparatus according to any preceding claim, wherein the processing means is configured to process image signals representing frames of a video signal on a frame-by-frame basis and the receiving means is configured for receiving an RGB video signal.

9. An apparatus for adjusting brightness of a screen on which input RGB colour signals are displayed, the apparatus, comprising:
a RGB colour signal generator to detect a total maximum value of the RGB colour signals, to compare the total maximum value with a predetermined critical value, and to generate RGB colour signals so as to increase or decrease a brightness level of an image displayed on the screen by one of a plurality of predetermined ratios based on the comparison result; and
a system controller to provide the predetermined critical value to the RGB colour signal generator.

10. The apparatus of claim 9, wherein the predetermined critical value comprises a first predetermined critical value determined in a case where the brightness level of pixels in an area of the screen from which the total maximum value is detected corresponds to substantially full white, and a second predetermined critical value determined in a case where the brightness level of pixels in the area corresponds to substantially full black.

11. The apparatus of claim 9, wherein if the total maximum value is greater than the first predetermined critical value, the RGB colour signal generator decreases the brightness level of the image on the screen by one of the predetermined ratios by generating less bright RGB colour signals, and if the total maximum value is less than the second predetermined critical value, the RGB colour signal generator increases the brightness level of the image on the screen by another of the predetermined ratios by generating brighter RGB colour signals.

12. The apparatus of claim 11, wherein the predetermined ratios are set using data provided from the system controller based on reference data input by a user.

13. The apparatus of claim 9, wherein the RGB colour signal generator windows a predetermined area of the screen, and then detects the total maximum value of the RGB colour signals in the predetermined area.

14. The apparatus of claim 13, wherein the predetermined area is determined depending on a highest resolution supported by the screen on which the image is displayed.

15. The apparatus of claim 9, wherein the brightness of the screen is automatically adjusted.

16. An apparatus for adjusting a colour temperature of a screen on which input RGB colour signals are displayed, the apparatus, comprising:
a RGB colour signal generator to detect a maximum value of each of a plurality of colour signals comprising the RGB colour signals, to compare the maximum values, and to generate other RGB colour signals, if one of the maximum values is greater than the others, having a colour temperature increased to a predetermined value; and
a system controller to provide the RGB colour signal generator with the predetermined value and data on conditions necessary for detecting a colour signal having the higher maximum value than the other colour signals.

17. The apparatus of claim 16., wherein the system controller provides a reference value used in comparing the maximum values and detecting the colour signal having the higher maximum value than the others with the data on the conditions, and the reference value is set based on a difference value such that a user perceives a maximum value of the colour signal displayed on the screen to be higher than those of the other colour signals.

18. The apparatus of claim 16, wherein the RGB colour signal generator detects the maximum values of the RGB colour signals in each frame.

19. The apparatus of claim 16, wherein the colour temperature of the screen is automatically adjusted.

20. An apparatus adjusting brightness and colour temperature of a screen on which input RGB colour signals are displayed, the apparatus, comprising:
an RGB colour signal generator to determine a maximum value of each of a plurality of colour signals comprising the RGB colour signals and a total maximum value of the input RGB colour signals, to compare the total maximum value with a predetermined critical value, to generate other RGB colour signals so as to increase and decrease a brightness level of the input RGB colour signals based on the comparison result, to compare the maximum values and if one of the maximum values is greater than the others to generate at least one RGB colour signal having a colour temperature varying by a predetermined value; and
a system controller to provide the RGB colour signal generator with data on the predetermined critical value, a reference value used for detecting the colour signal having the higher maximum value than the others, and the predetermined value.

21. The apparatus of claim 20, wherein the colour temperature of the detected colour signal is increased to the predetermined value.

22. The apparatus according to claim 20, wherein the colour temperature and the brightness of the screen are automatically adjusted.

23. A method of adjusting brightness of a screen on which input RGB colour signals are displayed, comprising:
detecting a total maximum value of the input RGB colour signals;
comparing the total maximum value with first and second predetermined critical values;
if the total maximum value is greater than the first predetermined critical value, decreasing a brightness level of an image at a predetermined ratio by generating another RGB colour signal having a decreased brightness level; and
if the total maximum value is less than the second predetermined critical value, increasing a brightness level of the image by a predetermined ratio by generating another RGB colour signal having an increased brightness level.

24. The method of claim 23, wherein the first predetermined critical value is determined in a case where the brightness level of pixels in an area of the screen from which the total maximum value is detected corresponds to substantially full white, and the second predetermined critical value is determined considering a case where the brightness level of pixels in an area of the screen from which the total maximum value is detected corresponds to substantially full black.

25. The method of claim 23, wherein the total maximum value is detected from a plurality of pixels in an area of the screen determined in consideration of a highest resolution supported by the screen on which the RGB colour signals are displayed

26. The method according to claim 23, wherein the adjusting brightness of the screen is automatic.

27. A method of adjusting a colour temperature of a screen on which input RGB colour signals are displayed, the method comprising:
detecting maximum values of a plurality of colour signals comprising the RGB colour signals;
comparing the maximum values so as to detect the colour signal having a higher maximum value than the others; and
if one of the maximum values is higher than the others, generating another RGB colour signal having a colour temperature increased to a predetermined value.

28. The method according to claim 27, wherein the adjusting the colour temperature of the screen is automatic.

29. A method of adjusting brightness and a colour temperature of a screen on which input RGB colour signals are displayed, the method comprising:
detecting and storing maximum values of colour signals comprising the input RGB colour signals;
detecting and storing a total maximum value of the RGB colour signals;
comparing the maximum values to detect the colour signal having a higher maximum value than the others;
if one of the maximum values is higher than the others, generating another RGB colour signal having a colour temperature increased to a predetermined value; and
comparing the total maximum value with a predetermined critical value and generating another RGB colour signal, having a brightness increased or decreased based on the comparison result.

30. The method of claim 29, wherein in if the total maximum value is greater than a first predetermined critical value, determined in case where a brightness level of pixels in an area of the screen from which the total maximum value is detected corresponds to substantially full white, then a brightness level of an image is decreased by a predetermined ratio to generate another RGB colour signal having decreased brightness, and if the total maximum value is less than a second predetermined critical value, determined in consideration of a case where brightness level of pixels in the area of the screen from which the total maximum value is detected corresponds to substantially full black, then a brightness level of the image is increased by a predetermined ratio to generate a RGB colour signal having increased brightness.

31. The method according to claim 30, wherein the adjusting brightness and the colour temperature of the screen are automatic.

32. A display adjusting apparatus for a display, comprising;
a first circuit having a first adjustment ability; and
a second circuit having a second adjustment ability;
wherein the first adjustment ability is automatically adjusting a colour temperature of the display, and the second adjustment ability is automatically adjusting a brightness of the display.

33. A display adjusting apparatus, as set forth in claim 32, wherein the first circuit and the second circuit each include a RGB colour signal generator.

34. A display adjusting apparatus for a display, comprising:
a command applying unit providing a reference brightness level and colour temperature value;
a system controller setting a windowing area in the display based on the reference brightness level and colour temperature value and determining display adjustment values; and
an RGB colour signal generator generating a signal based on the display adjustment values.

35. The display adjusting apparatus as set forth in claim 34, further comprising:
an on-screen display having a menu where the reference brightness level and colour temperature value may be set by a user.

36. A method of display adjustment for a display, comprising:
setting a windowing area on the display;
detecting and storing a maximum value of each of a plurality of colour signals comprising RGB colour signals in the windowing area;
detecting and storing a total maximum value of the plurality of the RGB colour signals;
comparing the maximum value of each colour signal to detect a first difference value;
comparing the first difference value to a first reference value to generate a first comparison value;
adjusting the display depending on the first comparison value;
comparing the total maximum value to a second reference value to generate a second comparison value; and
adjusting the display depending on the second comparison value.

37. The method of display adjustment, according to claim 36, wherein the adjusting the display depending on the first comparison value is a brightness level adjustment, and the adjusting the display depending on the second comparison value is a colour temperature adjustment.

38. A computer readable medium encoded with processing instructions for implementing a method of adjusting brightness of a screen on which input RGB colour signals are displayed, the method comprising:
detecting a total maximum value of the input RGB colour signals;
comparing the total maximum value with first and second predetermined critical values;
if the total maximum value is greater than the first predetermined critical value, decreasing a brightness level of an image at a predetermined ratio by generating another RGB colour signal having a decreased brightness level; and
if the total maximum value is less than the second predetermined critical value, increasing the brightness level of the image by a predetermined ratio by generating another RGB colour signal having an increased brightness level.

39. The computer readable medium according to claim 38, wherein the first predetermined critical value is determined in a case where a brightness level of pixels in an area of the screen from which the total maximum value is detected corresponds to substantially full white, and the second predetermined critical value is determined considering a case where the brightness level of pixels in an area of the screen from which the total maximum value is detected corresponds to substantially full black.

40. The computer readable medium according to claim 38, wherein the total maximum value is detected from a plurality of pixels in an area of the screen determined in consideration of a highest resolution supported by the screen on which the RGB colour signals are displayed.

41. A computer readable medium encoded with processing instructions for implementing a method of adjusting brightness of a screen on which input RGB colour signals are displayed, the method comprising:
detecting maximum values of a plurality of colour signals comprising the RGB colour signals;
comparing the maximum values so as to detect the colour signal having a higher maximum value than the others; and
if one of the maximum values is higher than the others, generating another RGB colour signal having a colour temperature increased to a predetermined value.

42. A computer readable medium encoded with processing instructions for implementing a method of adjusting brightness of a screen on which input RGB colour signals are displayed, the method comprising:
detecting and storing maximum values of colour signals comprising the input RGB colour signals;
detecting and storing a total maximum value of the RGB colour signals;
comparing the maximum values to detect the colour signal having a higher maximum value than the others;
if one of the maximum values is higher than the others, generating another RGB colour signal having a colour temperature increased to a predetermined value; and
comparing the total maximum value with a predetermined critical value and generating another RGB colour signal, having a brightness increased or decreased based on the comparison result.

43. The computer readable medium according to claim 42, wherein in if the total maximum value is greater than a first predetermined critical value, determined in case where the brightness level of pixels in an area of the screen from which the total maximum value is detected corresponds to substantially full white, then the brightness level of an image is decreased by a predetermined ratio to generate another RGB colour signal having decreased brightness, and if the total maximum value is less than a second predetermined critical value, determined in consideration of a case where the brightness level of pixels in the area of the screen from which the total maximum value is detected corresponds to substantially full black, then a brightness level of the image is increased by a predetermined ratio to generate a RGB colour signal having increased brightness.
